Europäisches Patentamt

**European Patent Office**

Office européen des brevets

(19)

(11) Numéro de publication: **0 311 483 B1**

(12) **FASCICULE DE BREVET EUROPEEN**

(45) Date de publication de fascicule du brevet: **09.12.92**

(51) Int. Cl.5: **B60G 11/18**, F16F 1/36, F16F 1/16

(21) Numéro de dépôt: **88402428.2**

(22) Date de dépôt: **27.09.88**

(54) **Train de roulement pour véhicule du type automobile.**

(30) Priorité: **05.10.87 FR 8713709**
**17.12.87 FR 8717625**
**27.01.88 FR 8800912**

(43) Date de publication de la demande:
**12.04.89 Bulletin 89/15**

(45) Mention de la délivrance du brevet:
**09.12.92 Bulletin 92/50**

(84) Etats contractants désignés:
**BE CH DE ES GB IT LI NL SE**

(56) Documents cités:
**EP-A- 0 085 584**       **EP-A- 0 094 295**
**EP-A- 0 237 619**       **DE-B- 1 077 539**
**DE-B- 1 091 879**       **DE-C- 968 975**
**FR-A- 799 899**          **FR-A- 2 576 993**
**GB-A- 2 110 590**

**PATENT ABSTRACTS OF JAPAN, vol. 8, no.
227 (M-332)[1664], 18 octobre 1984, page 96
M 332; & JP-A-59 109 315 (MITSUBISHI
RAYON K.K.) 25-06-1984**

(73) Titulaire: **THOR S.A.**
**8, Chemin du Sauvoy**
**F-77165 Saint-Soupplets(FR)**

(72) Inventeur: **Sardou, Max**
**43 Rue Alexandre-Dumas**
**FR-93230 Romainville(FR)**

(74) Mandataire: **Flavenot, Bernard**
**Société ABRITT 17, rue du Docteur Charcot**
**La Norville**
**F-91290 Arpajon(FR)**

Rank Xerox (UK) Business Services

## Description

La présente invention concerne les trains de roulement pour véhicules du type automobiles tels que voitures, camions ou analogues.

Actuellement, un train de roulement pour véhicule automobile comprend, dans la majorité des cas, et essentiellement pour les camions, un ensemble d'éléments constitué par une barre rigide et solide, et donc d'un poids très élevé, deux fusées situées aux deux extrémités de la barre servant de support à différents éléments comme les tambours, freins, etc, et des moyens de liaison au sol, par exemple des pneumatiques montés sur des jantes. Un tel train comporte aussi des ressorts et des amortisseurs montés en parallèle entre la barre et le châssis du véhicule.

Par contre, pour les automobiles qui sont plus légères, il existe des moyens que les techniciens dénomment "essieux à barres de torsion", comme ceux décrits dans le FR-A-799 899 très schématiquement constitués par des manivelles, une pour chaque roue. Généralement réalisées en acier, ces manivelles sont encombrantes et ne donnent pas réellement satisfaction.

La présente invention a pour but de pallier certains des inconvénients mentionnés ci-dessus, mais surtout de réaliser un train de roulement pour véhicule automobile, qui soit adapté aussi bien aux véhicules légers comme les automobiles qu'aux véhicules lourds comme les camions, engins de travaux publics ou analogues, quelles que soient leurs application et/ou destination, et qui soit à la fois léger, peu encombrant et aussi performant, sinon plus, que ceux de l'art antérieur décrits ci-avant.

Plus précisément, la présente invention a pour objet un train de roulement pour véhicule, comportant un châssis, au moins deux roues aptes à prendre contact avec un sol, des moyens pour associer les deux dites roues audit châssis et les maintenir dans deux plans sensiblement parallèles, cesdits moyens comportant au moins une poutre unitaire, des moyens pour sensiblement immobiliser en rotation par rapport audit châssis ladite poutre sensiblement en un point situé entre ses deux extrémités, au moins deux cames, des moyens pour solidariser les deux dites cames sensiblement à l'une de leurs extrémités, respectivement aux deux extrémités de ladite poutre, et des moyens pour monter rotatives les deux dites roues respectivement aux deux secondes extrémités desdites cames, caractérisé par le fait que les deux parties de la poutre situées de part et d'autre dudit point situé entre les deux extrémités de la poutre sont en un matériau ayant, pour chacune d'elles, une élasticité de torsion anisotrope opposée à celle de l'autre partie, ledit matériau étant un matériau composite comportant des enroulements en spirale de fibres, lesdits enroulements des deux parties de la poutre étant en sens opposés.

D'autres caractéristiques et avantages de la présente invention apparaîtront au cours de la description suivante donnée en regard des dessins annexés à titre illustratif, mais nullement limitatif, dans lesquels :

Les figures 1 et 2 représentent respectivement deux vues en coupe suivant deux directions perpendiculaires, de dessus et de côté, d'un mode de réalisation d'un train de roulement selon l'invention, la coupe illustrée par la figure 1 étant référencée I-I sur la figure 2 et celle illustrée par la figure 2 étant référencée II-II sur la figure 1.

La figure 3 représente, sous forme schématique et partielle, un élément du mode de réalisation du train de roulement selon les figures 1 et 2.

Les figures 4 et 5 représentent les schémas de deux autres modes de réalisation d'un train de roulement selon l'invention.

La figure 6 représente, en vue de côté partielle, l'un des élémentsselon l'invention entrant dans la constitution du système d'encastrement d'une came sur une poutre pour train de roulement.

La figure 7 représente en coupe partielle l'élément selon la figure 1 en association avec une poutre, et

La figure 8 représente, sous forme schématique, l'ensemble d'un mode de réalisation d'une poutre faisant application du perfectionnement selon l'invention.

La figure 9 représente un schéma permettant d'expliciter la réalisation d'un encastrement selon l'invention.

Les figures 10 et 11 représentent, vu en coupes perpendiculaires, un mode de réalisation d'un système d'encastrement d'une barre de torsion en matériau composite selon l'invention.

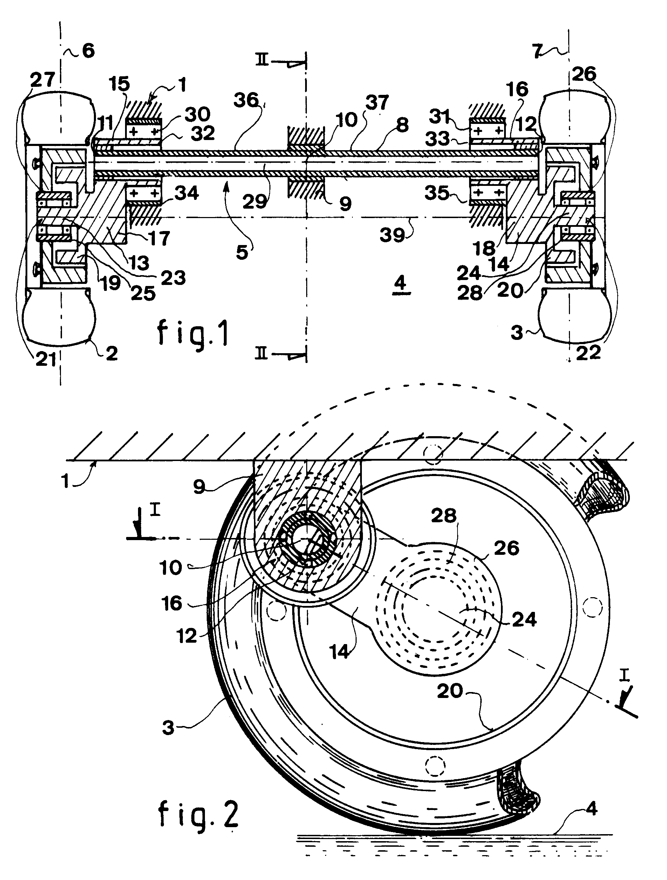

Les figures 1 et 2 représentent un mode de réalisation d'un train de roulement, par exemple pour un camion. Ce train comporte un châssis 1, deux roues 2, 3 aptes à prendre contact avec un sol 4 et des moyens 5 pour associer les deux roues 2, 3 au châssis 1 et les maintenir dans deux plans sensiblement parallèles 6, 7.

Ces moyens 5 pour associer les deux roues 2, 3 au châssis et les maintenir dans les deux plans 6, 7 comportent une poutre unitaire 8, c'est-à-dire une poutre réalisée d'un seul tenant, c'est-à-dire d'une seule pièce ou en plusieurs morceaux assemblés ensuite bout à bout. Ils comportent aussi des moyens 9 pour immobiliser au moins en rotation par rapport au châssis cette poutre 8, en un point 10 situé entre ses deux extrémités 11, 12, ce point étant en fait situé sensiblement au milieu de la poutre, pour obtenir un train de roulement homogène présentant une fonction symétrique, ne serait-ce que pour la sécurité de conduite du véhicule pouvant comprendre un tel train. A chacune de ses deux extrémités 11, 12, le train comporte en plus deux cames 13, 14.

Les deux cames sont respectivement solidarisées, sensiblement à l'une de leurs extrémités 15, 16, aux deux extrémités 11, 12 de la poutre 8 et les deux roues sont montées en rotation respectivement sur les deux secondes extrémités 17, 18 des cames.

Dans l'exemple de réalisation illustré, les moyens pour monter ces roues rotatives sur les cames sont constitués par des porte segments de freins à tambour 19, 20 respectivement reliés aux extrémités 17, 18 des cames avec un axe 21, 22 constituant la partie centrale 23, 24 d'un roulement 25, 26, par exemple du type à billes ou analogue, dont la roue est solidaire de la bague extérieure 27, 28. Dans un autre mode de réalisation pratique, l'extrémité de la came pourra être reliée au support de pince de frein à disque. Ces moyens connus en eux-mêmes ne seront pas plus amplement décrits ici.

Cependant, selon le matériau dans lequel est réalisée la poutre, il est avantageux que le train comporte en outre des moyens pour maintenir les deux extrémités 11, 12 de la poutre sensiblement sur un axe 29 fixe par rapport au châssis 1.

Ces moyens pour maintenir les deux extrémités de la poutre sur l'axe 29 fixe par rapport au châssis 1 peuvent comporter, pour chaque extrémité, un palier du type à roulement à billes 30, 31, ou même un palier lisse ou analogue, dont la bague intérieure 32, 33 est reliée fixement à l'extrémité 11, 12 de la poutre ou 15, 16 de la came, et dont la bague extérieure 34, 35 est fixée solidairement au châssis 1. La figure 1 illustre un mode de réalisation de ces moyens de maintien des extrémités de la poutre. Il peut cependant être envisagé que la poutre constitue directement la partie centrale du palier, par exemple la bague centrale du roulement 32, 33.

Dans la pratique, les deux roues sont situées sur un même axe 39, pour obtenir, comme cela sera explicité ci-après, un bon fonctionnement du train de roulement. Dans ce cas, les deux parties 36, 37 de la poutre situées de part et d'autre du point 10 de fixation avec le châssis, sont réalisées en un matériau ayant, pour chacune d'elles, une élasticité anisotrope de torsion opposée à celle de l'autre. De cette façon, les forces de torsion qui sont appliquées sur les deux parties 36, 37 de la poutre, vues par les deux extrémités de la poutre en regardant son point de fixation 10, sont, pour l'une, dans le sens senestrorsum, en l'occurrence pour la roue 2, et, pour l'autre, dans le sens dextrorsum, en l'occurrence pour la roue 3.

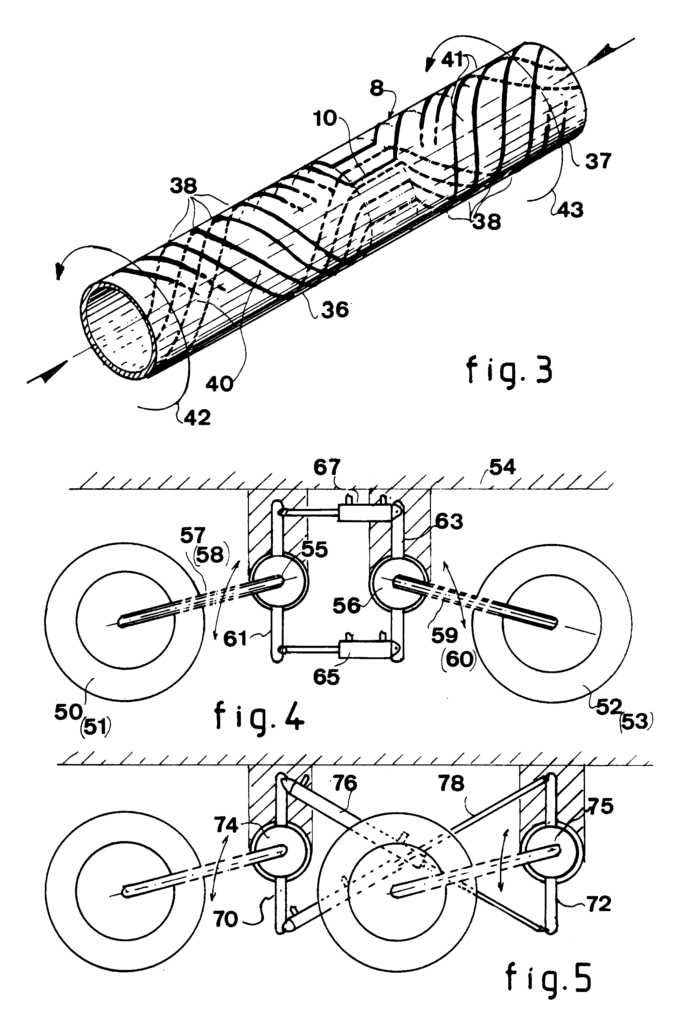

Dans un mode de réalisation avantageux la poutre est réalisée comme schématisé sur la figure 3, en un matériau composite et préférentiellement de forme cylindrique de révolution, comportant des pluralités d'enroulements de fibres 38 en spirale, dans un sens 40 pour la partie 36 de la poutre 8, et dans l'autre sens 41 pour la seconde partie 37. Dans ces conditions, si la poutre est immobilisée au moins en rotation en son point milieu 10, la rotation senestrorsum schématisée par la flèche 42 travaillant en torsion va pouvoir être contrôlée dans les meilleures conditions, puisque les fibres 38 de l'enroulement 40 vont avoir tendance à être mises en traction et donc à contrôler très efficacement la torsion. Il en est de même pour la rotation dextrorsum schématisée en 43 de l'autre extrémité.

Dans cette configuration, le train de roulement fonctionne de la façon suivante :

Lorsqu'il se déplace sur un sol, un véhicule muni d'un tel train de roulement est susceptible de rencontrer des obstacles qui doivent être surmontés et absorbés en étant transmis au châssis avec le moins d'effet possible, tout en permettant aux roues de conserver l'adhérence au sol. Lorsqu'une roue rencontre donc un obstacle, le choc crée sur elle un déplacement en rotation autour de l'axe de la poutre, ce déplacement étant transmis par la liaison de la came qui agit comme bras de levier. Cependant, la poutre étant immobilisée en rotation en l'un de ses points, avantageusement en son milieu, et étant réalisée en un matériau présentant une élasticité de torsion anisotrope, en particulier dans le cas d'une réalisation en un matériau composite à enroulements de fibres, l'effet de torsion imposé par le choc fait naître dans la poutre un effort de réaction très intense et croissant assez rapidement pour contrôler cet effet de torsion en un temps très court. La roue est donc ramenée à sa position d'équilibre d'origine, c'est-à-dire quand le poids du véhicule appliqué sur elle est compensé par la torsion exercée sur la portion de poutre reliée à elle par la came.

Cette configuration de poutre unitaire permet de réaliser des trains compact qui présentent un minimum d'encombrement. De plus, la nature du matériau dans lequel est réalisée la poutre et le petit nombre d'éléments qui les constitue permettent d'obtenir des trains de roulement beaucoup plus légers que ceux de l'art antérieur, ce qui est le but recherché pour améliorer le rendement des véhicules automobiles.

Bien entendu, à une telle poutre, sont associés des moyens d'amortissement. Ceux-ci étant connus en eux-mêmes, ne seront pas décrits ici.

Dans le mode de réalisation décrit ci-dessus, il est mentionné que les cames sont solidaires des deux extrémités de la poutre 8. Dans certains cas, les moyens de solidarisation peuvent comporter des moyens de liaison avec au moins un degré de liberté en rotation autour d'un axe sensiblement perpendiculaire au sol sur lequel est apte à se déplacer le véhicule comportant un tel train de roulement. Ces moyens permettent de régler ce que les techniciens appellent le "parallélisme des roues" et peuvent être constitués, par exemple, par une articulation en chappe ayant son axe de rotation perpendiculaire au sol. Ils comportent aussi des moyens de blocage de cette liaison lorsque la rotation voulue est obtenue. Le train de roulement peut aussi comporter une articulation, éventuellement du même type, aux autres extrémités 17, 18 de la came, afin d'obtenir des rotations des deux roues autour d'un axe sensiblement perpendiculaire au sol, pour pouvoir diriger le véhicule comportant un tel train.

Le mode de réalisation illustré sur les figures 1 à 3 est avantageux pour un train de roulement comportant une roue de chaque côté du châssis, les moyens pour immobiliser en rotation la poutre par rapport au châssis peuvent être constitués par tous moyens connus. Cependant, l'invention peut trouver une application avantageuse pour des trains de roulement comportant plusieurs roues situées les unes derrière les autres, comme celles que l'on trouve sur les camions ou véhicules analogues, dans lesquels ces moyens pour immobiliser en rotation la poutre sensiblement en son milieu, par rapport au chassis, sont obtenus de façon indirecte.

La figure 4 représente, vu de côté, un premier mode de réalisation d'un train de roulement comportant quatre roues 50-53 montées deux par deux de chaque côté du châssis 54, sensiblement dans deux plans parallèles. Le train comporte alors également deux poutres unitaires 55, 56 avec bien entendu, comme pour le train selon le mode décrit ci-avant, des moyens pour les maintenir, par leurs deux extrémités, sensiblement sur un axe. Mais ce mode de réalisation ne comporte aucun moyen de liaison matériel direct entre le point milieu des poutres et le châssis.

Pour immobiliser en rotation les deux poutres sensiblement en leur milieu, le train de roulement comporte deux manivelles 61, 63 respectivement associées aux deux poutres 55, 56 suivant une direction sensiblement perpendiculaire à l'axe de chaque poutre, et en ayant deux parties situées de part et d'autre de cet axe, les extrémités des deux parties d'une manivelle associée à une poutre étant respectivement reliées par une bielle 65, 67 aux extrémités des deux parties d'une manivelle associée à l'autre poutre. Ces deux manivelles 61, 63 sont respectivement fixées aux deux poutres 55, 56 aux points qui doivent être immobilisés en rotation par rapport au châssis, c'est-à-dire, pour chaque poutre, le point milieu 10 défini sur la poutre 8 dans le mode de réalisation illustré sur la figure 1. Les deux manivelles sont donc situées dans un plan perpendiculaire aux axes des deux poutres et passant par les deux points d'immobilisation.

Dans le mode de réalisation illustré sur la figure 4, les deux roues 50, 52 situées l'une derrière l'autre dans un même plan sont de part et d'autre de la position des deux poutres et celles-ci sont réalisées en un matériau composite, et telles que les portions de poutres se trouvant d'un même côté du plan défini ci-dessus passant par les deux manivelles aient une élasticité anisotrope opposée. Avec cette configuration, les deux manivelles 61, 63 et les deux bielles 65, 67 forment un quadrilatère convexe.

Ainsi, il n'est plus nécessaire de lier directement les points milieux des poutres au châssis. En effet, cette liaison est indirectement obtenue par l'action des deux paires de couples de forces s'exerçant aux deux extrémités des poutres sous le poids du châssis, plus exactement du véhicule comportant un tel train de roulement, et la réaction des roues 50-53 sur le sol, ces couples étant compensés par les liaisons en opposition excercées par les bielles. Les deux paires de roues 50-53 vont alors prendre une position d'équilibre sous la charge du châssis transmise aux poutres par les paliers de roulement situés à leurs extrémités.

Le train de roulement selon la figure 4 fonctionne, pour chaque poutre, de la même façon que celle décrite en regard de la figure 1. Par contre, avec cette réalisation, il est très facilement possible de régler l'assiette du châssis par rapport au sol. En effet, les bielles 65, 67 sont avantageusement commandables en longueur, par exemple comme des vérins. Cette configuration permet de prépositionner angulairement les poutres d'une valeur d'angle facilement déterminable et, avec cette rotation relative des deux poutres, il est possible de faire varier l'orientation des cames 57-60, et donc la distance des poutres par rapport au sol, c'est-à-dire de commander l'assiette du véhicule.

Dans le mode de réalisation décrit ci-dessus, les deux roues situées sur un même côté du châssis l'une derrière l'autre sont situées à une certaine distance relativement importante l'une de l'autre, bien que les cames reliant les roues aux poutres soient de courte longueur, ce qui peut être, dans certains cas, un mode de réalisation qui n'est pas possible.

Le mode de réalisation illustré sur la figure 5 permet de disposer les roues très proches l'une derrière l'autre et d'un même côté par rapport aux deux poutres, les portions de poutres en regard ayant, dans ce cas, des élasticités anisotropes de mêmes sens.

Dans ce mode de réalisation, les manivelles 70, 72 associées respectivement aux deux poutres 74, 75 sont reliées par des bielles 76, 78 formant avec elles un quadrilatère croisé. Ce mode de réalisation ne pose pas de problème quant à son fonctionnement et ses avantages, ceux-ci se déduisant facilement de ceux décrits ci-avant en regard de la figure 4.

Les modes de réalisation illustrés sur les figures 4 et 5 trouvent une application particulièrement avantageuse dans le cas d'un train de roulement en tridem, c'est-à-dire un train comportant trois paires de roues situées les unes derrière les autres de chaque côté du châssis. Dans ce cas, les trois poutres de liaison entre deux roues situées de chaque côté du châssis peuvent être reliées par un ensemble de bielles-manivelles selon une combinaison des réalisations illustrées sur les figures 4 et 5, ou une série de deux réalisations illustrées sur la figure 5. Une série de deux réalisations telles qu'illustrées sur la figure 4 pourrait présenter des inconvénients, notamment quant à la longueur des bielles nécessaires pour l'une des liaisons. Néanmoins, dans le cadre d'un tridem, la structure du train selon l'invention permet très aisément sa transformation en tandem. Cette transformation s'effectue en commandant la longueur des bielles pour soulever par rapport au sol l'une des paires de roues associée à une poutre. Ce type de train de roulement trouve une application particulièrement intéressante sur des camions ou remorques pouvant transporter des charges très lourdes, car il leur permet de rouler en tandem lorsqu'ils ne sont pas trop chargés.

Il est en outre à remarquer que, dans un train de roulement ne comportant qu'une seule poutre unitaire, les moyens pour immobiliser en rotation le point central de la poutre par rapport au châssis peuvent être constitués par une manivelle solidarisée à la poutre en ce point et part une bielle de longueur variable reliant l'extrémité de la manivelle au châssis. En conséquence, en commandant la longueur de cette bielle, il est possible, de même que décrit précédemment, de pouvoir ajuster l'assiette du véhicule.

Comme décrit en regard des figures 4 et 5, les deux extrémités des manivelles respectivement liées à deux poutres sont reliées par deux bielles de longueur variable. Cependant, dans certains cas, pour immobiliser en rotation le point central de chaque poutre, il est possible de n'utiliser qu'une seule bielle réunissant les deux manivelles, la stabilisation étant obtenue par la force de réaction exercée sur les roues par le sol sous l'action du poids du véhicule comportant un tel train de roulement. Par exemple, dans le cas de la réalisation selon la figure 4, il serait possible de supprimer l'une des deux bielles, par exemple la bielle 67. Il serait alors avantageusement nécessaire de prévoir un palier de réaction situé à proximité de l'ancrage de la manivelle sur la poutre, pour lui permettre de rotuler dans un alésage et d'absorber ainsi les efforts de déformation qui sont appliqués à la poutre.

De plus, dans un mode de réalisation avantageux, aussi bien dans le cas d'un train de roulement comportant une seule poutre que dans celui en comportant plusieurs, chaque manivelle associée à chaque poutre peut être reliée au châssis 54 par un vérin, et l'alimentation en énergie de chaque vérin peut être commandée, par exemple, par une centrale d'élaboration d'ordres, afin de pouvoir adapter sa longueur, et donc la position angulaire de la poutre, pour obtenir, notamment, une correction de l'assiette de charge du véhicule.

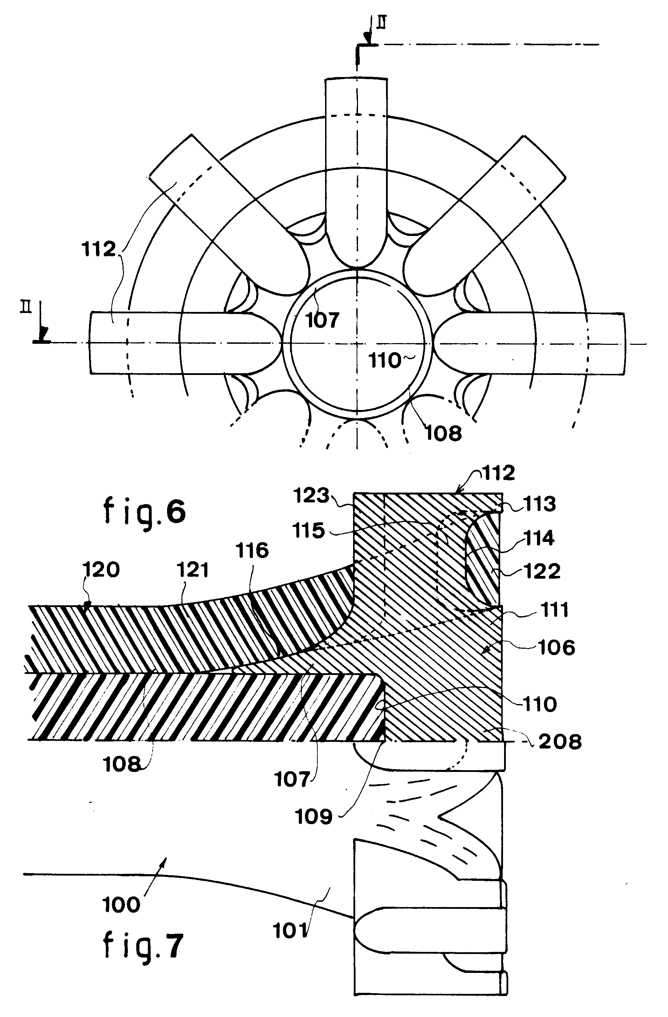

Les figures 6 à 8 représentent un autre mode de mise en oeuvre d'un train de roulement selon l'invention et, comme ces trois figures représentent un même mode de réalisation, les mêmes références y désignent des éléments semblables, quelles que soient les figures sur lesquelles elles apparaissent et quelles que soient la forme de représentation de ces éléments et leur échelle.

Le train de roulement selon les figures 6 à 8, comporte une poutre unitaire 100 et, respectivement à ses deux extrémités 101, 102, deux cames 103, 104 sur lesquelles peuvent respectivement être montées au moins deux roues, celles-ci n'ayant pas été représentées dans un souci de simplification du dessin. Chaque came 103, 104 comporte des moyens d'encastrement 105 qui comprennent au moins un manchon 106 apte à entourer au contact la poutre 100 sur au moins une partie 107 de sa paroi latérale 108.

Avantageusement, le manchon 106 comporte une partie rentrante 208 formant un épaulement contre le fond duquel 110 la face 109 de l'extrémité 101 de la poutre 100 peut venir buter en étant parfaitement emprisonnée. Sur la périphérie 111 de ce manchon 106 est situé au moins un ergot 112, et avantageusement une pluralité, comme cela apparaît sur les figures. Ces ergots 112 comportent avantageusement, sur leur partie de face 113 opposée à la poutre 100 lorsque l'extrémité 101 de celle-ci est enfichée dans la manchon 106, une encoche 114 à bords arrondis 115, afin d'éviter des contours contondants ou coupants. Bien entendu, l'encoche 114 permet de bien guider les fibres qui, dans une réalisation plus simple, peuvent s'enrouler autour des ergots sans encoche, les bords de ceux-ci étant alors arrondis.

Dans une forme avantageuse, le manchon 106, plus particulièrement sa partie 107 entourant la paroi latérale 108 de l'extrémité 101 de la poutre, présente une paroi extérieure 116 à épaisseur décroissante en partant des ergots vers la partie centrale de la poutre.

De plus, les moyens d'encastrement de la came 103 comportent au moins une fibre 120 dont une première partie 121 est enroulée sur la paroi latérale 108 de la poutre 100 et dont une seconde partie 122 est enroulée au moins partiellement autour de l'ergot 112 de façon que cette fibre 120, plus particulièrement sa partie 122, passe dans l'encoche 114 en épousant les contours 115 arrondis de celle-ci. Les fibres 120 étant susceptibles de subir des efforts de traction importants, la forme avantageuse des contours de l'encoche 114 empêche la formation d'éventuelles entailles qui pourraient y créer des points de faiblesse pouvant entraîner leur rupture.

Avantageusement, la deuxième partie 122 de la fibre 120 peut entourer l'ergot sur plusieurs spires d'enroulement et son extrémité peut lui être solidarisée par tout moyen, notamment par des colles thermodurcissables, polymérisables, etc... Cependant, afin d'assurer une continuité et une homogénéité à la répartition des efforts transmis de la came 103 à l'extrémité 101 de la poutre 100, la deuxième partie 122 de la fibre peut à son tour être enroulée autour de la poutre 100.

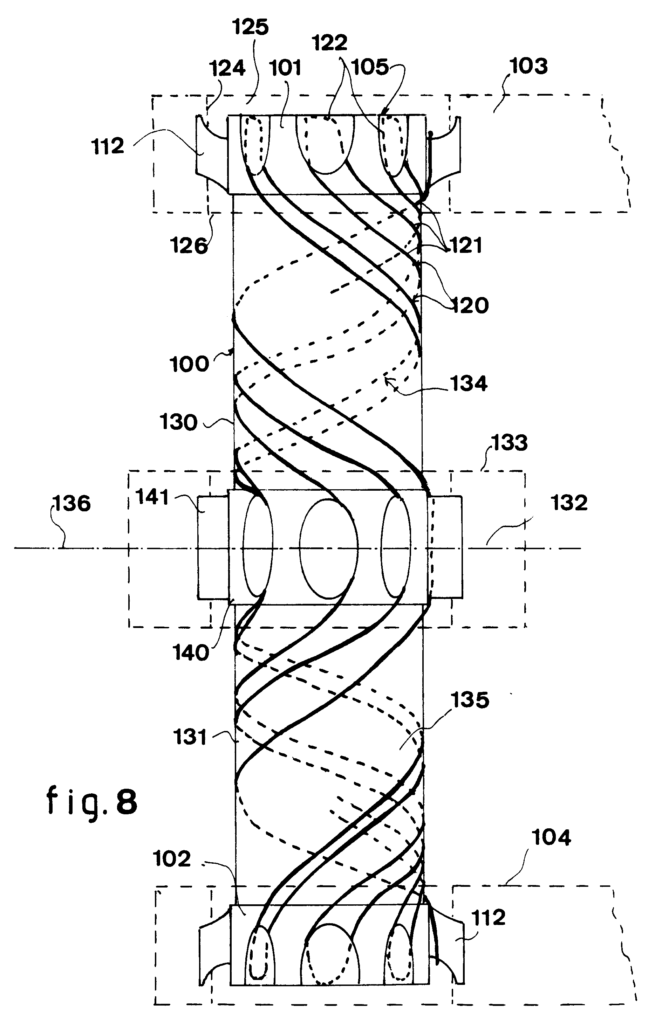

Plus particulièrement sur la figure 8, la fibre 120 a été représentée par un trait continu, dans un souci de simplification et de clarté du dessin. Mais, dans une réalisation industrielle, le système d'encastrement comportera une pluralité d'ergots 112, comme illustré sur les figures, et les fibres 120 seront en quantité suffisante pour obtenir les efforts nécessaires à la transmission en torsion et entoureront ces pluralités d'ergots 112.

Les ergots 112 peuvent avoir une longueur suffisante pour émerger de l'enroulement des fibres 120 sur au moins une partie 123, cette partie 123 pouvant constituer des dentures aptes à s'encastrer dans des dentures complémentaires en creux réalisées par exemple sur la périphérie 124 d'un logement traversant 125 réalisé dans l'extrémité 126 d'une came, par exemple la came 103. Le manchon 106 peut lui aussi être utilisé pour réaliser l'encastrement de la poutre, par exemple, par vissage, clavetage, soudage, etc...

Dans le cadre du mode de réalisation d'un train de roulement selon l'invention illustré sur ces figures 6 à 8, les deux cames 103, 104 sont donc encastrées dans les deux extrémités 101, 102 de la poutre par les mêmes moyens que ceux qui sont décrits ci-dessus, comprenant essentiellement des manchons avec épaulement, des ergots en saillie et des fibres enroulées autour de la poutre après avoir entouré l'un des ergots en passant par exemple dans les encoches 114.

Dans un mode de réalisation avantageux, les deux parties 130, 131 de la poutre 100 situées de part et d'autre du point 132 qui est relié par des moyens d'immobilisation en rotation 133 au châssis d'un véhicule sont en un matériau présentant, pour chacune d'elles, une élasticité de torsion anisotrope opposée à celle de l'autre partie. Dans ce cas, la poutre 100 est réalisée, par exemple, avec un matériau composite comportant des enroulements de matériaux fibreux, ces enroulements étant en spires de forme sensiblement hélicoïdale, celui de l'une des parties de la poutre étant de sens opposé à celui de l'autre.

Aussi, pour ne pas contrarier l'élasticité de torsion d'une telle poutre, dans un mode avantageux de réalisation, les fibres 120 telles que décrites ci-dessus et passant autour des ergots sont respectivement enroulées elles aussi en forme de spirales hélicoïdales, dans le même sens que l'enroulement des fibres composant les deux parties de la poutre présentant la phénomène d'élasticité de torsion anisotrope. Dans ce cas, les fibres 120 peuvent être enroulées de façon continue sur les deux parties de poutre 130, 131 pour former respectivement un premier enroulement 134 dans un sens et un second enroulement 135 dans le sens opposé, le changement de sens d'enroulement se situant sensiblement dans un plan 136 définissant le point 132 de la poutre immobilisé en rotation par rapport au châssis.

Dans un mode de réalisation avantageux et dépendant de la structure du système d'encastrement décrit ci-dessus, le changement du sens d'enroulement peut être obtenu, par exemple, au moyen d'un second manchon 140 entourant la poutre 100 sensiblement au niveau du plan 136 défini ci-dessus, ce manchon étant solidarisé à la périphérie de la poutre par tout moyen, notamment celui décrit dans l'art antérieur rappelé au Préambule de la présente Description. Ce deuxième manchon 140 comporte, sur sa périphérie, des parties en saillie 141 formant des ergots présentant des contours à surface arrondie de telle façon que les fibres 120 puissent s'appuyer sur ces ergots et ainsi changer le sens d'enroulement, comme cela apparaît sur la figure 3, pour donner, de part et d'autre du plan 136, deux élasticités de torsion anisotropes opposées et pour passer plus facilement le couple de torsion par leur extrémité.

Une telle réalisation permet donc d'obtenir de façon industrielle un train de roulement comportant une poutre unitaire qui peut garder son élasticité de torsion anisotrope et constituer avec, notamment les cames, un produit industriel qui peut être facilement monté sur un châssis de véhicule automobile.

Un tel train de roulement fonctionne de la même façon que celui décrit ci-avant. Son fonctionnement ne sera donc pas plus amplement rappelé ici. Il est néanmoins précisé que, si la came 103 est soumise à une torsion lorsque la roue rencontre un obstacle, la force sera parfaitement transmise au moins à la partie 130 de la poutre 100 et le contrôle en torsion sera obtenu par l'intermédiaire des ergots agissant en traction sur les fibres 120 en tendant à resserrer les enroulements autour de cette partie 130. Le phénomène est identique pour la came 104. La continuité des fibres permet de donner une homogénéité à l'ensemble de la structure du train et de bien maintenir les deux manchons parfaitement associés avec les extrémités de la poutre.

Dans un mode de réalisation avantageux, le second manchon 140 avec ses parties en saillie 141 peut être constitué par deux manchons identiques au premier manchon 106, mais accouplés par leur face opposée au fond 110 de leur épaulement, de façon à être symétriques par rapport à cette face. Ce mode de réalisation permet de réduire encore le prix de revient d'un tel train de roulement.

La fixation notamment de la poutre sur le chassis ou la came sur la poutre, comme décrit ci-avant peut poser un problème, notamment parce que leur perçage peut leur faire perdre une de leurs caractéristiques essentielles, la solidité. Il est également presque impossible de les souder à des pièces de liaison, par exemple des pattes de fixation en matériau classique comme de l'acier.

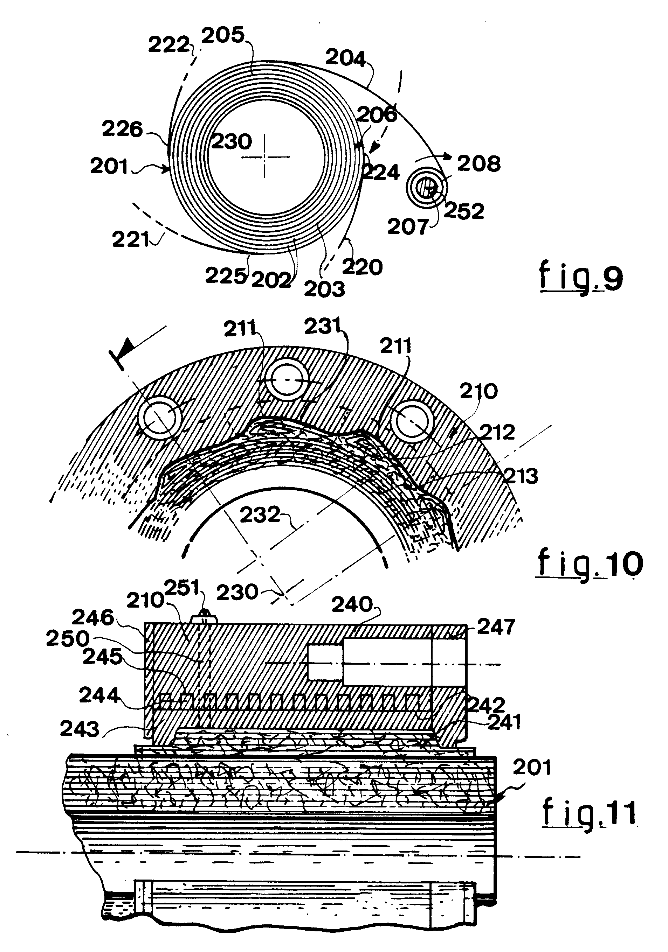

La figure 9 illustre une mise en oeuvre d'un système d'encastrement d'une poutre de torsion selon la présente invention. Il est tout d'abord précisé que la poutre est réalisée selon les techniques décrites ci-avant, avec des matériaux composites, pour former, par exemple, un cylindre de révolution 201 plein ou creux, comme représenté. Cette poutre peut être par exemple constituée d'un bobinage de fibres 202, par exemple de verre ou de carbone, associées solidairement les unes aux autres, par exemple par des matériaux thermoplastiques ou des résines polymérisables.

Sur la périphérie 203 de la poutre, à l'endroit où elle doit être encastrée et donc maintenue le plus fermement possible, est enroulée une première extrémité 206 d'une fibre sous forme de ruban 204 de façon à former une pluralité de tours fermement plaqués contre la périphérie de la barre. Avec le restant 207 du ruban non enroulé sur la poutre il est formé une surépaisseur. Cette surépaisseur est, par exemple, avantageusement constituée par enroulement de cette extrémité sur elle-même pour former un bobinage secondaire 208.

Quand l'enroulement secondaire 208 est terminé, il est rabattu contre la paroi extérieure du bobinage primaire que forme la poutre avec l'enroulement de la première extrémité 206 du ruban 204.

Ce bobinage secondaire forme donc, sur la périphérie de la poutre, une excroissance qui d'ailleurs peut être relativement modelée pour lui donner une forme déterminée notamment comme celle qui est représentée sur les figures 10 et 11. Cette forme est déterminée pour que le bobinage secondaire 208 épouse le plus parfaitement possible l'alvéole 211 aménagée dans la pièce 210 réalisée en un matériau qui peut être métallique comme de l'acier et utilisée comme pièce de liaison de la poutre avec d'autres éléments, par exemple le châssis d'un véhicule. Ensuite, dans cette alvéole contenant le bobinage secondaire 208, est coulée, par exemple, de la résine polymérisable ou thermodurcissable comme mentionné ci-avant, l'alvéole 211 jouant, dans cette opération, un rôle de moule. De cette façon, l'excroissance 212 ainsi réalisée épouse parfaitement la surface latérale intérieure 213 de l'alvéole. Le mode de réalisation décrit ci-dessus n'est qu'un exemple. En effet, les fibres telles que les fibres de verre peuvent être imprégnées de résine préalablement à leur enroulement.

Dans le mode de réalisation décrit ci-dessus, il a été donné un exemple de réalisation d'une excroissance. Mais il est important que l'ancrage soit le plus solide et rigide possible, notamment dans le cas du maintien d'une poutre de torsion.

Aussi, selon une réalisation avantageuse, sur la périphérie de la poutre 201, il est enroulé simultanément une pluralité de premières extrémités de rubans 220, 221, 222, ..., comme pour le ruban 204, de façon que ces enroulements primaires sur la poutre se chevauchent. Par contre, ces enroulements s'arrêtent à des endroits régulièrement espacés 224, 225, 226, ..., et les extrémités libres des rubans sont enroulées sur elles-mêmes comme décrit ci-avant, afin de former des excroissances réparties sur le pourtour de la barre destinées à épouser l'intérieur d'alvéoles correspondantes 211 dans la pièce 210.

De même que précédemment, quand les enroulements secondaires sont dans leurs alvéoles correspondantes 211, le matériau de solidarisation est coulé pour solidariser les spires de chaque bobinage secondaire et remplir les éventuels espaces entre ce bobinage et la surface intérieure de chaque alvéole. Chaque excroissance peut donc ainsi parfaitement épouser la paroi latérale intérieure de son alvéole correspondante 211.

De ce fait, le pluralité d'excroissances coopérant avec la pluralité d'alvéoles permet un encastrement en toute sécurité et avec des efforts de maintien, notamment dans le cas d'une torsion, bien répartis sur toute la périphérie de la poutre 201.

La forme des alvéoles peut être quelconque. Cependant, avantageusement, plus particulièrement dans le cas d'une poutre destinée à être soumise à des torsions autour de son axe longitudinal 230, ces excroissances sont sensiblement en dents de scie comportant au moins un flanc 231 à pente douce telle que la médiatrice 232 de ce flanc passe à proximité de l'axe 230, ou présentant une forme légèrement concave.

Quant à elle, la pièce de liaison 210 doit être réalisée dans un matériau facilement usinable et lui permettant d'être aisément liée à d'autres éléments. Elle peut être aussi soit forgée, soit moulée et le matériau choisi est généralement de l'acier.

Dans une forme avantageuse, cette pièce 210 de maintien est composée d'une partie centrale 240 comportant une percée traversante 241 dans la paroi 242 de laquelle sont réalisées les alvéoles 211 définies ci-avant. Ces alvéoles peuvent être directement usinées sur cette paroi. Cependant, il est aussi possible de réaliser une percée ayant un diamètre nominal plus important et de chemiser cette percée avec des éléments modulaires amovibles 243 juxtaposés les uns à côté des autres sur toute sa périphérie, par exemple en étant enfichés au moyen d'ergots 244 dans des orifices 245 correspondants.

Cette partie centrale 240 est ensuite bordée par deux flasques 246, 247, le flasque 247 étant fixé avant que par exemple la résine polymérisables ait été coulée comme explicité ci-avant.

Cependant, dans un autre mode de réalisation, la résine peut être introduite dans les alvéoles, par exemple au moyen de canaux d'injection 250 par leur orifice d'entrée 251.

Le système d'encastrement d'une poutre de torsion décrit ci-dessus présente incontestablement des avantages par rapport à ceux de l'art antérieur. L'enroulement secondaire s'ajuste facilement pour être parfaitement positionné en regard de son alvéole correspondante, assurant ainsi plus de sécurité à l'encastrement, et la résine polymérisable, en étant coulée dans chaque alvéole, permet de parfaire l'encastrement en bouchant les interstices qui peuvent exister. Il n'est plus nécessaire de prévoir des broches annexes et la mise en oeuvre de tout le système est des plus simples.

Dans le mode de réalisation décrit ci-avant, l'excroissance ou la surépaisseur est obtenue par l'enroulement d'une extrémité de la fibre sur elle-même. Cependant, pour économiser sur la quantité utilisée de ces fibres et de résine, on peut préférer pincer cette extrémité à l'aide d'un embout 252 relativement volumineux, puis éventuellement enrouler la fibre sur cet embout, celui-ci pouvant être en un matériau classique comme du fer ou analogue.

Dans le mode de réalisation décrit ci-dessus, la matière utilisée pour lier entre elles les spires des bobinages secondaires, c'est-à-dire le matériau thermoplastique ou la résine polymérisable ou analogue, est coulée dans les alvéoles lorsque la pièce de liaison 210 est déjà en place. Mais, pour pouvoir effecteur cette coulée, il a été démontré que la pièce 210 devait comporter des moyens particuliers, par exemple des percées d'injection 250 qui compliquent incontestablement sa réalisation.

Pour éviter cet inconvénient, il est possible de solidariser ces surépaisseurs ou bobinages secondaires en utilisant un gabarit faisant fonction de moule ayant des alvéoles identiques à celles que comporte la pièce de liaison qui doit être solidarisée à demeure à la poutre. Ce gabarit comporte tous les moyens qui permettent d'effectuer le moulage des excroissances dans la forme définitive qu'elles doivent avoir pour pouvoir entrer en étroite association avec la pièce de liaison 210. Quand ce moulage est terminé, le gabarit est enlevé et remplacé par la pièce 210 dont les alvéoles épousent parfaitement les surépaisseurs obtenues avec le gabarit. Le flasque 247 est ensuite placé pour compléter la pièce 210, ce qui permet de bien emprisonner les surépaisseurs et d'assurer l'encastrement définitif.

Dans le cas de la mise en oeuvre avantageuse précédente, la pièce de liaison 210 peut être dépouillée d'éléments augmentant son coût de revient, comme les canaux d'injection 250.

## Revendications

1. Train de roulement pour véhicule, comportant un châssis (1;54), au moins deux roues (2,3;50-53) aptes à prendre contact avec un sol (4), des moyens (5) pour associer les deux dites roues audit châssis et les maintenir dans deux plans (6,7) sensiblement parallèles, cesdits moyens comportant au moins, une poutre unitaire (8;55,56;74,75;100;201), des moyens (9) pour sensiblement immobiliser en rotation par rapport audit châssis ladite poutre sensiblement en un point (10) situé entre ses deux extrémités (11,12), au moins deux cames (13,14;54-60;103,104), des moyens (105) pour Solidariser les deux dites cames sensiblement à l'une de leurs extrémites (15,16), respectivement aux deux extrémités de ladite poutre, et des moyens (19-28) pour monter rotatives les deux dites roues respectivement aux deux secondes extrémités (17,18) desdites cames, caractérisé par le fait que les deux parties (36,37) de la poutre (8) situées de part et d'autre dudit point situé entre les deux extrémités de la poutre sont en un matériau ayant, pour chacune d'elles, une élasticité de torsion anisotrope (42,43) opposée à celle de l'autre partie, ledit matériau étant un matériau composite comportant des enroulements en spirale de fibres (38), lesdits enroulements des deux parties de la poutre étant en sens opposés.

2. Train selon la revendication 1, caractérisé par le fait que les moyens (9) pour immobiliser en rotation ladite poutre par rapport audit châssis sensiblement en un point comportent une manivelle (61,63;70,72) fixée solidairement à ladite poutre (55,56;74,75), sensiblement audit point de celle-ci.

3. Train selon la revendication 2, caractérisé par le fait que ladite manivelle est située dans un plan sensiblement perpendiculaire à l'axe longitudinal de ladite poutre.

4. Train selon la revendication 3, caractérisé par le fait qu'il comporte des moyens (65,67) pour relier à un point de référence l'extrémité de ladite manivelle opposée à celle reliée à ladite poutre, ledit point de référence étant constitué par l'un des éléments suivants, châssis et l'extrémité d'une autre manivelle liée à une autre poutre.

5. Train selon la revendication 4, caractérisé par le fait que lesdits moyens pour relier à un point de référence l'extrémité de ladite manivelle opposée à celle reliée à ladite poutre sont constitués par une bielle (65,67;76,78).

6. Train selon la revendication 2, caractérisé par le fait qu'il comporte en outre deux autres roues (50-53) aptes à prendre contact avec un sol, des moyens pour associer lesdites quatre roues audit châssis deux par deux et les maintenir dans deux plans sensiblement parallèles, cesdits moyens pour associer lesdites roues deux par deux audit châssis et les maintenir respectivement sensiblement dans deux plans parallèles comportant deux poutres unitaires (55,56;74,75), des moyens pour maintenir les extrémités des deux poutres respectivement sur deux axes sensiblement parallèles, des moyens pour immobiliser en rotation par rapport audit châssis chacune desdites poutres sensiblement en un point situé entre leurs deux extrémités, deux paires de cames (57-60), les deux dites cartes d'une paire étant solidarisées, sensiblement à l'une de leurs extrémités, aux deux extrémités d'une des deux dites poutres, et des moyens pour monter rotatives lesdites roues respectivement aux deux secondes extrémités desdites cames, lesdits moyens pour immobiliser en rotation par rapport audit châssis chacune desdites poutres sensiblement en un point situé entre ses deux extrémités étant constitués par une manivelle (61,63;70,72) associée à ladite poutre sensiblement en cedit point suivant une direction sensiblement perpendiculaire à l'axe de ladite poutre, l'extrémité d'une manivelle (61,70) associée à une première poutre (55,74) étant reliée par une bielle (65,67;76,78) à l'extrémité de l'autre manivelle (63,72) associée à la seconde poutre (56,75).

7. Train selon la revendication 6, caractérisé par le fait que chaque manivelle comporte deux parties situées de part et d'autre dudit axe de la poutre, les extrémités des parties d'une manivelle (61) associée à une première poutre (55) étant respectivement reliées par une bielle (65,67) aux extrémités des parties de l'autre manivelle (63) associée à la seconde poutre (56), les portions de poutres situées d'un même côté du plan passant par les deux dites manivelles ayant des élasticités anisotropes opposées, lesdites bielles (65,67) et manivelles (61,63) formant alors un quadrilatère convexe.

8. Train selon la revendication 6, caractérisé par le fait que chaque manivelle comporte deux parties situées de part et d'autre dudit axe de la poutre, les extrémités des parties d'une manivelle (61) associée à une première poutre (55) étant respectivement reliées par une bielle (65,67) aux extrémités des parties de l'autre manivelle (63) associée à la seconde poutre (56),les portions de poutres situées d'un même côté du plan passant par les deux dites manivelles ayant des élasticités anisotropes de même sens, lesdites bielles (65,67) et manivelles (61,63) formant alors un quadrilatère croisé.

9. Train selon la revendication 1, caractérisé par le fait que lesdits moyens pour solidariser au moins une came à une extrémité de ladite poutre comportent un manchon (106) entourant au contact ladite poutre, au moins un ergot (112) monté en saillie vers l'extérieur et solidaire de la paroi extérieure (116) dudit manchon, et au moins une fibre (120) dont une première partie (121) est enroulée sur ladite poutre et dont une seconde partie (122) entoure au moins partiellement ledit ergot.

10. Train selon la revendication 9, caractérisé par le fait que ledit manchon (106) comporte une partie rentrante (208) forment un épaulement avec lequel coopère la face (109) de l'extrémité (101) de ladite poutre (100).

11. Train selon l'une des revendications 9 et 10, caractérisé par le fait que, les deux parties (130,131) de la poutre (100) situées de part et d'autre du point (132) immobilisé (133) en rotation par rapport au châssis d'un véhicule étant en un matériau présentant, pour chacune d'elles, une élasticité de torsion anisotrope opposée à celle de l'autre partie, la première partie (121) de ladite fibre (120) est enroulée en spires de forme sensiblement hélicoïdale, son enroulement sur l'une des parties de ladite poutre étant de sens opposé à celui sur l'autre partie.

12. Train selon la revendication 11, caractérisé par le fait qu'il comporte des moyens pour maintenir lesdites fibres (120) au changement de sens de leur enroulement.

13. Train selon la revendication 12, caractérisé par le fait que lesdits moyens pour maintenir lesdites fibres au changement de sens de leur enroulement sont constitués par un second manchon (140) entourant ladite poutre (100) sensiblement au niveau d'un plan (136) passant sensiblement par ledit point (132) immobilisé en rotation, et des moyens pour solidariser ledit second manchon à la poutre, ledit manchon comportant sur sa périphérie au moins une partie en saillie (141) à contours arrondis, de façon que les fibres (120) s'appuyent sur cette partie en saillie au niveau du changement de sens de leur enroulement.

14. Train selon la revendication 2, caractérisé par le fait que les moyens pour immobiliser ladite poutre en rotation par rapport audit châssis et/ou lesdits moyens pour solidariser les deux dites cames respectivement aux deux extrémités de ladite poutre comportent des moyens d'encastrement, cesdits moyens d'encastrement comportant, sur la périphérie (203) de ladite poutre, un enroulement d'une première extrémité (206) d'une fibre sous forme d'un ruban (204), sur une longueur déterminée pour former un bobinage primaire, l'autre extrémité libre (207) dudit ruban comportant des moyens pour former une surépaisseur, cette surépaisseur étant plaquée contre le bobinage primaire et disposée dans une alvéole (211) réalisée sur la périphérie d'une percée traversante d'une pièce de liaison (210) entourant ladite poutre.

15. Train selon la revendication 14, caractérisé par le fait que ladite surépaisseur est constituée par l'extrémité libre (207) dudit ruban bobinée sur elle-même pour former un bobinage secondaire (208).

16. Train selon la revendication 15, caractérisé par le fait que ledit bobinage secondaire (208) est modelé après son enroulement pour lui donner une forme sensiblement identique à celle de ladite alvéole (211).

17. Train selon l'une des revendications 14 à 16, caractérisé par le fait que ladite pièce de liaison (210) est constituée d'une partie centrale (240) dans laquelle est réalisée une percée traversante (241), ladite alvéole étant réalisée dans la paroi latérale (242) de ladite percée, et de deux flasques (246,247) disposés latéralement de part et d'autre de la partie centrale pour fermer au moins partiellement les deux extrémités de ladite alvéole, ladite alvéole étant réalisée dans des éléments modulaires amovibles (243) chemisant ladite percée traversante et qu'il comporte des moyens d'association de ces éléments modulaires avec la paroi latérale de ladite percée traversante.

## Claims

1. Axle suspension for a motor vehicle, including a chassis (1, 54), at least two wheels (2, 3; 50-53) suitable For coming into contact with ground (4), means (5) for associating said two wheels with said chassis and holding them in two substantially parallel planes (6, 7), said means comprising at least a unit beam (8; 55,56; 74,75; 100; 201), means (9) for substantially preventing a point (10) situated substantially between the two ends (11, 12) of the beam from rotating relative to said chassis, two arms (13,14; 57-60; 103,104), means (105) for fixing each arm substantially at one of its ends (15, 16) to a respective one of the two ends of the beam, and means (19-28) for rotatably mounting respective ones of said two wheels to the opposite ends (17, 18) of said arms, characterized by the fact that the two portions (36, 37) of the beam (8) situated on either side of said point situated between the two ends of the beam are made of a material such that each of them has anisotropic torsion elasticity (42, 43) in the opposite direction to the other, said material being a composite material including spiral-wound fibers (38), said windings in the two portions of the beam being in opposite directions.

2. Axle suspension according to claim 1, characterized by the fact that means (9) for preventing substantially a point of said beam from rotating relative to said chassis comprise a crank (61,63;70,72) fixed to said beam (55,56; 74,75) substantially at said point thereof.

3. Axle suspension according to claim 2, characterized by the fact that said crank is situated in a plane substantially perpendicular to the longitudinal axis of said beam.

4. Axle suspension according to claim 3, characterized by the fact that it includes means (65,67) for connecting the end of said crank opposite to its end connected to said beam to a reference point, said reference point being constituted by one of the following items: chassis and the end of another crank connected to another beam.

5. Axle suspension according to claim 4, characterized by the fact that said means for connecting the end of said crank opposite from its end connected to said beam to a reference point are constituted by a link (65,67; 76,78).

6. Axle suspension according to claim 2, characterized by the fact that it further includes two other wheels (50-53) suitable for coming into contact with ground, means for associating said four wheels with said chassis in pairs and holding them in two substantially parallel planes, said means for associating said wheels with said chassis in pairs and holding them in two substantially parallel planes including two unit beams (55,56; 74,75), means for holding the ends of the two beams respectively on two substantially parallel axes, means for preventing respective points situated between the two ends of the two beams from rotating relative to said chassis, two pairs of arms (57-60), with each arm in each pair being fixed substantially at one of its ends to a respective end of one of said beams, and means for rotatably mounting said wheels respectively at the two second ends of said arms, with said means for preventing each of said beams from rotating relative to said chassis substantially at a point situated between its two ends being constituted by a crank (61,63; 70,72) associated with said beam substantially at said point and extending along a direction substantially perpendicular to the axis of said beam, the end of the crank (61, 70) associated with a first one of the beams (55, 74) being connected by a link (65,67; 70,78) to the end of the other crank (63, 72) associated with the other beam (56,75).

7. Axle suspension according to claim 6, characterized by the fact that each crank comprises two portions situated on opposite sides of said beam axis, the ends of the two portions of the crank (61) associated with a first one of the beams (55) being respectively connected by a link (65, 67) to the ends of the portions of the other crank (63) associated with the other beam (56), with the portions of the beams situated on the same side of the plane passing through said two cranks having opposite anisotropic elasticity, said links (65, 67) and cranks (61, 63) then forming a convex quadrilateral.

8. Axle suspension according to claim 6, characterized by the fact that each crank comprises two portions situated on opposite sides of said beam axis, the ends of the two portions of the crank (61) associated with a first one of the beams (55) being respectively connected by a link (65, 67) to the ends of the portions of the other crank (63) associated with the other beam (56), with the portions of the beams situated in the same side of the plane passing through said two cranks having same direction anisotropic elasticity, said links (65, 67) and cranks (61, 63) then forming a crossed quadrilateral.

9. Axle suspension according to claim 1, characterized by the fact that said means for fixing at least one arm to an end of said beam comprise a sleeve (106) surrounding said beam and in contact therewith, at least one peg (112) projecting outwardly from and fixed to the outside wall (116) of said sleeve, and at least one fiber (120) having a first portion (121) which is wound around said beam and a second portion (122) surrounding said peg, at least in part.

10. Axle suspension according to claim 9, characterized by the fact that said sleeve (106) includes a reentrant portion (208) forming a shoulder which co-operates with the face (109) of the end (101) of said beam (100).

11. Axle suspension according to claim 9 or 10, characterized by the fact that, since each of the two portions (130, 131) of the beam (100) situated on either side of the point (132) which is prevented (133) from rotating relative to the chassis of a vehicle is made of a material having torsion elasticity which is anisotropic in a direction opposite to that of the other portion, the first portion (121) of said fiber (120) is wound in substantially helical turns, with its winding around one of said beam portions being in the opposite direction to the winding around the other portion.

12. Axle suspension according to claim 11, characterized by the fact that it includes means for holding said fibers (120) where they change winding direction.

13. Axle suspension according to claim 12, characterized by the fact that said means for holding said fibers where they change winding direction are constituted by a second sleeve (140) surrounding said beam, 100 substantially level with a plane (136) passing substantially through said point (132) which is prevented from rotating, and means for fixing said second sleeve to the beam, the periphery of said sleeve including at least one rounded contour projecting portion (141), such that the fibers (120) bear against said projecting portion when they change winding direction.

14. Axle suspension according to claim 2, characterized by the fact that said means for preventing said beam from rotating relative to said chassis and/or said means for fixing said arms respectively to the ends of said beam include housing means comprising a winding on the periphery (203) of said beam, said winding being of a determined length from a first end (206) of a fiber in the form of a tape (204) suitable for forming a primary winding, the other free end (207) of said tape including means for forming an excess thickness, said excess thickness being pressed against the primary winding and being disposed in a recess (211) formed in the periphery of a bore through a connection piece (210) surrounding said beam.

15. Axle suspension according to claim 14, characterized by the fact that said excess thickness is constituted by the free end (207) of said tape wound onto itself in order to form a secondary winding (208).

16. Axle suspension according to claim 15, characterized by the fact that said secondary winding (208) is shaped after being wound so as to make it substantially identical in shape to said recess (211).

17. Axle suspension according to any one of claims 14 to 16, characterized by the fact that said connection piece (210) is constituted by a central portion (240) having a through bore (241) formed therein, said recess being provided in the side wall (242) of said through bore, and by two webs (246, 247) disposed at either end of said central portion in order to at least partially close the two ends of said recess, with said recess being made from removable modular components (243) which line said through bore, and by the fact that it includes means for associating said modular components with the side wall of said through bore.

**Patentansprüche**

1. Achs-Aggregat für ein Fahrzeug mit einem Chassis (1; 54), mindestens zwei mit einem Boden (4) in kontaktbringbaren Rädern (2,3; 50 -53), Mitteln (5) zum Verbinden der Räder mit dem Chassis und zum Halten derselben in zwei im wesentlichen parallelen Ebenen ( 6,7), welche Mittel mindestens einen einheitlichen Träger (8; 55,56; 74,75; 100; 201), Mittel (9), um jeden Träger im wesentlichen an einen Punkt (10) zwischen seinen beiden Enden (11,12) im wesentlichen gegen Drehung relativ zu dem Chassis festzulegen, mindestens zwei Nocken (13,14; 54-60; 103,104), Mittel (105) zum Verbinden der beiden Nocken im wesentlichen an einem ihrer Enden (15,16) mit den jeweiligen beiden Enden des Trägers, und Mittel (19-28) zum drehbaren Montieren der beiden Räder an den jeweiligen beiden zweiten Enden (17,18) der Nocken, dadurch gekennzeichnet, daß die beiden Abschnitte (36,37) des Trägers (8) beidseits des zwischen den Enden des Trägers liegenden Punktes aus einem Material bestehen, das für jeden von ihnen eine anisotrope Torsionselastizität (42,43) entgegengesetzt derjenigen des jeweils anderen Abschnitts aufweist, welches Material ein Kompositmaterial ist, das Spiralwindungen aus Fasern (38) umfaßt, wobei die Windungen der beiden Abschnitte des Trägers in entgegengesetztem Windungssinn vorliegen.

2. Achs-Aggregat nach Anspruch 1, dadurch gekennzeichnet, daß die Mittel (9) zum Sichern des Trägers gegen Drehung relativ zu dem Chassis im wesentlichen an einem Punkt eine Kurbel (61,63;70,72) umfassen, die fest mit dem Träger (55,56;74,75) im wesentlichen an dem genannten Punkt desselben verbunden ist.

3. Achs-Aggregat nach Anspruch 2, dadurch gekennzeichnet, daß die Kurbel in einer Ebene angeordnet ist, die im wesentlichen senkrecht zur Längsachse des Trägers ist.

4. Achs-Aggregat nach Anspruch 3, dadurch gekennzeichnet, daß es Mittel (65,67) umfaßt zum Verbinden des Endes der Kurbel, abgekehrt demjenigen, das mit dem Träger verbunden ist, mit einem Referenzpunkt, der gebildet wird von einem der folgenden Elemente: Chassis und das Ende einer weiteren, mit einem weiteren Träger verbundenen Kurbel.

5. Achs-Aggregat nach Anspruch 4, dadurch gekennzeichnet, daß die Mittel zum Verbinden des Endes der Kurbel, das dem mit dem Träger verbundenen Ende abgekehrt ist, mit einem Referenzpunkt von einem Lenker (65,67;76,78) gebildet sind.

6. Achs-Aggregat nach Anspruch 2, dadurch gekennzeichnet, daß es ferner zwei weitere Räder (50-53) für das Kontaktieren eines Bodens umfaßt, Mittel zum Verbinden der vier Räder paarweise mit dem Chassis und für ihr Halten in zwei im wesentlichen parallelen Ebenen, welche Mittel zum Verbinden der Räder paarweise mit dem Chassis, und um sie jeweils im wesentlichen in zwei parallelen Ebenen zu halten, zwei Einheitsträger (55,56;74,75) umfassen, Mittel zum Halten der Enden der beiden Träger jeweils in zwei im wesentlichen parallelen Achsen, Mittel zum Drehfestlegen bezüglich des Chassis jedes der Träger im wesentlichen an einem Punkt, der zwischen ihren beiden Enden liegt, zwei Paare von Nocken (57-60), welche beiden Nocken eines Paares im wesentlichen mit einem ihrer Enden mit zwei Enden eines der beiden Träger verbunden sind, und Mittel zum drehbaren Montieren der Räder jeweils auf den beiden zweiten Enden der Nocken, welche Mittel zum Drehfestlegen bezüglich des Chassis jedes der Träger im wesentlichen an einem Punkt zwischen ihren beiden Enden von einer Kurbel (61,63;70,72) gebildet sind, zugeordnet dem Träger im wesentlichen an dem genannten Punkt gemäß einer Richtung im wesentlichen senkrecht zur Achse des Trägers, wobei das Ende einer Kurbel (61,70) zugeordnet einem ersten Träger (55,74) über einen Lenker (65,67;76,78) mit dem Ende der anderen Kurbel (63,72) verbunden ist, die dem zweiten Träger (56,75) zugeordnet ist.

7. Achs-Aggregat nach Anspruch 6, dadurch gekennzeichnet, daß jede Kurbel zwei beidseits der Trägerachse liegende Abschnitte aufweist, wobei die Enden der Abschnitte einer Kurbel (61), zugeordnet einem ersten Träger (55), über einen Lenker (65,67) jeweils mit den Enden der Abschnitte der anderen Kurbel (63), zugeordnet dem zweiten Träger (56), verbunden sind, wobei die Abschnitte der Träger auf ein und derselben Seite bezüglich einer Ebene, die durch die beiden Kurbeln verläuft, entgegengesetzt anisotrope Elastizitäten aufweisen, wobei die Lenker (65,67) und Kurbeln (61,63) ein konvexes Vierseit bilden.

8. Achs-Aggregat nach Anspruch 6, dadurch gekennzeichnet, daß jede Kurbel zwei beidseits der Trägerachse liegende Abschnitte aufweist, wobei die Enden der Abschnitte einer Kurbel (61), zugeordnet einem ersten Träger (55), verbunden sind jeweils über einen Lenker (65,67) mit den Enden der Abschnitte der anderen Kurbel (63), zugeordnet dem zweiten Träger (56), wobei die Abschnitte der Träger auf derselben Seite einer durch die beiden Kurbeln verlaufenden Ebene anisotrope Elastizitäten gleicher Richtung aufweisen, wobei die Lenker (65,67) und Kurbeln (61,63) ein gekreuztes Vierseit bilden.

9. Achs-Aggregat nach Anspruch 1, dadurch gekennzeichnet, daß die Mittel zum Verbinden mindestens eines Nockens mit einem Ende des Trägers eine Manschette (106) umfassen, die mit Kontakt den Träger umschließt, mindestens einer außen vorspringenden und mit der Außenwandung (16) der Manschette verbundenen Vorsprung (112) sowie mindestens eine Faser (120), von der ein erster Abschnitt (121) auf den Träger aufgerollt ist, und von der ein zweiter Abschnitt (122) mindestens teilweise den Fortsatz umschließt.

10. Achs-Aggregat nach Anspruch 9, dadurch gekennzeichnet, daß die Manschette (106) eine rückspringende Partie (208) aufweist, die eine Schulter bildet, mit der die Stirn (109) des Endes (101) des Trägers (100) zusammenwirkt.

11. Achs-Aggregat nach einem der Ansprüche 9 und 10, dadurch gekennzeichnet, daß die beiden Abschnitte (130,131) des Trägers (100) beidseits des Punktes (132), der bezüglich Drehung relativ zum Chassis eines Fahrzeuges festgelegt (133) ist, aus einem Material bestehen, das für jeden von ihnen eine anisotrope, derjenigen des anderen Abschnitts entgegengesetzte Torsionselastizität aufweist, wobei der erste Abschnitt (121) der Faser (120) spiralförmig im wesentlichen schraubenartig aufgerollt ist, wobei die Windungen eines der Abschnitte des Trägers in entgegengesetztem Windungssinn sind, wie diejenigen des anderen Abschnitts.

12. Achs-Aggregat nach Anspruch 11, dadurch gekennzeichnet, daß es Mittel umfaßt zum Halten der Fasern (120) gegen Änderungen des Wickelsinnes.

13. Achs-Aggregat nach Anspruch 12, dadurch gekennzeichnet, daß die Mittel zum Halten der Fasern gegen Änderungen des Wickelsinnes von einer zweiten Manschette (140) gebildet sind, die den Träger (100) im wesentlichen in Höhe einer Ebene (136) umschließt, welche im wesentlichen durch den Punkt (132) verläuft, an dem die Sicherung gegen Drehung vorliegt, und Mittel zum Verbinden der zweiten Manschette mit dem Träger, welche Manschette auf ihrer Peripherie mindestens eine vorspringende Partie (141) mit abgerundeten Konturen aufweist, derart, daß die Fasern (120) sich auf dieser vorspringenden Partie in Höhe der Änderung des Wickelsinnes abstützen.

14. Achs-Aggregat nach Anspruch 2, dadurch gekennzeichnet, daß die Mittel zum Festlegen des Trägers gegen Drehung relativ zum Chassis und/oder die Mittel zum Verbinden der beiden Nocken mit den jeweiligen beiden Enden des Trägers Einspannmittel umfassen, welche Einspannmittel auf der Peripherie (203) des Trägers eine Windung eines ersten Endes (206) einer Faser in Form eines Bandes (204) auf einer vorbestimmten Länge umfassen zum Bilden einer Primärwicklung, während das andere freie Ende (207) des Bandes Mittel umfaßt zum Bilden einer Verdickung, welche Verdickung gegen die Primärwicklung geschichtet ist und in einer Ausnehmung (211) angeordnet ist, die auf der Peripherie einer Bohrung realisiert ist, welche ein Verbindungsstück (210) durchsetzt, das den Träger umschließt.

15. Achs-Aggregat nach Anspruch 14, dadurch gekennzeichnet, daß die Verdickung von dem freien Ende (207) des Bandes gebildet ist, das auf sich selbst gewickelt ist zum Bilden einer Sekundärwicklung (208).

16. Achs-Aggregat nach Anspruch 15, dadurch gekennzeichnet, daß die Sekundärwicklung (208) nach ihrem Winden modelliert wird, um ihr eine Form im wesentlichen identisch mit der der Ausnehmung (211) zu geben.

17. Achs-Aggregat nach einem der Ansprüche 14 bis 16, dadurch gekennzeichnet, daß das Verbindungsstück (210) von einer zentralen Partie (240) gebildet ist, in der eine Durchgangsbohrung (241) realisiert ist, wobei die Ausnehmung in der Seitenwandung (242) der Bohrung realisiert ist, und daß zwei Flansche (246,247) seitlich beidseits der zentralen Partie angeordnet sind zum mindestens teilweisen Abschließen der beiden Enden der Ausnehmung, welche Ausnehmung in modularen, beweglichen Elementen (243) realisiert ist, welche die Durchgangsbohrung auskleiden, und daß es Verbindungsmittel dieser modularen Elemente mit der Seitenwandung der Durchgangsbohrung umfaßt.

fig.1

fig.2

fig.3

fig.4

fig.5

II

112

II

107

110~

108

fig.6

123
115

112
113
114
122
111
106
110
208

120    121    116

108

107

109

100

101

fig.7

fig.8

fig.9

fig.10

fig.11